# FASCICULE DE BREVET EUROPEEN

(11) **EP 1 939 270 B1**
(45) Date de publication et mention de la délivrance du brevet: **17.02.2010**
(21) Numéro de dépôt: 07291527.5
(22) Date de dépôt: 14.12.2007
(51) Int. Cl.: C10G 27/02, C10G 27/12, C10G 53/14, B01J 21/06, B01J 23/16, B01J 23/40, B01J 23/70, B01J 31/18

(54) **Démétallation de coupes hydrocarbonées pétrolières et son utilisation**
Entmetallisierung von bituminösen Erdölschnitten und deren Verwendung
Demetallation of oil and hydrocarbon cuts and use of same

(30) Priorité: 29.12.2006 FR 0611532
(43) Date de publication de la demande: 02.07.2008
(73) Titulaire: TOTAL RAFFINAGE MARKETING, 92800 Puteaux (FR); Centre National de la Recherche Scientifique, 75016 Paris (FR)
(72) Inventeur: Battioni, Pierrette, 91300 Massy (FR); Borremans, Didier, 7300 Boussu (BE); Capacchi, Silvia, 43100 Parma (IT); Langellier, Christophe, 76210 Nointot (FR); Loire, Guillaume, 94800 Villejuif (FR); Macon, Philippe, 76133 Manéglise (FR); Mansuy, Daniel, 75015 Paris (FR)
(74) Mandataire: Largeau, Béatrice

(56) Documents cités:
- EP-A- 0 115 382
- EP-A- 0 704 447
- WO-A-01/48119
- US-A- 4 197 192

## Description

La présente invention concerne la démétallation de coupes hydrocarbonées, et plus particulièrement de coupes hydrocarbonées pétrolières.

Le pétrole sous toutes ses formes, y compris les huiles lourdes, les schistes et les sables bitumineux, contient naturellement des impuretés et en particulier des métaux tels que le nickel, le vanadium, le fer, le cobalt, l'arsenic... A ces impuretés présentes naturellement dans le pétrole, il convient d'ajouter celles apportées par le recyclage de déchets pétroliers et hydrocarbures divers qui pourront contenir de nombreux métaux à l'état de trace et en particulier le plomb, le cuivre, l'arsenic...

Les métaux, et en particulier le nickel, le vanadium et le fer sont essentiellement complexés sous forme de composés organométalliques présents dans les résines et les asphaltènes, eux-mêmes présents dans le pétrole brut et les huiles lourdes, en particulier dans des structures de type porphyrines présentes généralement dans les fractions lourdes du pétrole. On parle généralement dans ce cas de pétroporphyrines. Dans cette structure porphyrinique, le motif de base est constitué par un ensemble de quatre cycles pyrroliques, le métal étant au centre de cet ensemble sous forme cationique :

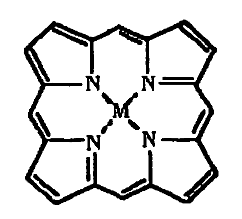

L'élimination de ces métaux aussi tôt que possible dans les traitements des bruts est une nécessité, car ces métaux réduisent la durée de vie des catalyseurs qui sont utilisés dans les opérations de raffinage en aval, telles que craquage catalytique, hydrocraquage, hydrodésulfuration... En effet, certains métaux tels que le vanadium, empoisonnent le catalyseur, en se déposant à sa surface, tendant à en réduire l'activité, ce qui nécessite le remplacement prématuré dudit catalyseur. D'autres métaux, tels que le nickel, génèrent des réactions secondaires, comme la déshydrogénation. De plus, les métaux peuvent poser des problèmes de corrosion des fours et contribuer à la formation de poussières polluantes dans les fumées de combustion.

Dans l'industrie du raffinage, si nécessaire, les métaux présents dans les hydrocarbures d'origine pétrolière sont éliminés par hydrotraîtement, et plus particulièrement par hydrodémétallation (HDM). L'inconvénient d'un tel procédé est qu'il nécessite la consommation d'une grande quantité d'hydrogène H₂, et qu'il est mis en oeuvre dans des conditions réactionnelles sévères (haute température et forte pression).

Plusieurs procédés de démétallation dans des conditions réactionnelles plus douces ont été proposés, mais aucun n'est apparu rentable à l'échelle industrielle. On peut citer les procédés physiques de démétallation, tels que la photodécomposition ou l'irradiation gamma, qui restent inefficaces, car le pétrole agit comme bouclier en constituant un milieu favorable à la dissipation de l'énergie. On peut citer également les procédés biologiques qui se basent sur l'activité démétallisante métabolique que présentent certains microorganismes, tels que les bactéries Ralstonia Eutropha. Ceux-ci utilisent les pétroporphyrines en tant que source d'azote, aboutissant ainsi à la solubilisation des métaux contenus. Néanmoins, un tel phénomène présente une faible reproductibilité et une complexité telles qu'elles s'opposent à toute application à l'échelle industrielle. Enfin, des procédés chimiques de dèmétallation de métalloporphyrines ont été décrits en utilisant des acides minéraux comme l'acide fluorhydrique HF... et d'autres agents oxydants comme l'hypochlorite de sodium NaOCl, l'acide peracétique CH₃COOOH et en général tous les peroxyacides, le dichloro-dioxyde de soufre SO₂Cl₂, le dioxyde d'azote N₂O₄... Mais toutes ces réactions nécessitent des quantités importantes de réactifs, et de plus n'agissant pas de manière sélective, elles entraînent de nombreuses altérations du milieu hydrocarboné conduisant parfois à la formation de nombreux sous-produits génants.

Le document US 4 197 192 décrit un procédé de démétallation de coupes pétrolières dé type résidus ou asphalténes, lequel comprend une étape d'oxydation en présence d'un agent oxydant.

La demanderesse se propose d'apporter une solution technique permettant une extraction sélective du métal au coeur des pétroporphyrines dégradées, dans des conditions réactionnelles douces.

A cette fin, l'invention propose un procédé de démétallation d'hydrocarbures d'origine pétrolière comprenant au moins une coupe hydrocarbonée ayant une température d'ébullition supérieure ou égale à 360°C, ledit procédé étant caractérisé en ce qu'il comprend au moins une étape d'oxydation en présence d'au moins un agent oxydant et d'au moins un catalyseur comprenant au moins une métalloporphyrine tétra méso substituée et/ou une métallophtalocyanine tétra substituée.

En effet, la demanderesse a découvert, de manière surprenante, que certaines métalloporphyrines catalysent sélectivement la dégradation oxydante des pétroporphyrines naturellement présentes dans les coupes hydrocarbonées d'origine pétrolière, contrairement aux réactions d'oxydation conduites en absence de ces structures.

L'invention a également comme objet l'utilisation du procédé selon l'invention pour éliminer les métaux contenus dans les coupes pétrolières telles que le pétrole brut léger, pétrole brut lourd, pétrole brut, résidu atmosphérique, résidu sous vide, schistes bitumineux.

L'invention présente plusieurs avantages. En particulier, en opérant une extraction exclusive du métal au coeur des pétroporphyrines, tout en affectant assez peu les autres constituants de la charge traitée, le procédé selon l'invention contribue à augmenter substantiellement la quantité valorisable d'un brut traditionnellement d'utilité limitée à cause d'une haute teneur en métaux. De plus, les métaux extraits selon le procédé de l'invention sont également valorisables. Tel est le cas, notamment, du vanadium et du nickel qui peuvent être vendus comme matière première pour l'industrie chimique.

L'invention présente également un intérêt économique considérable et une sécurité améliorée, par rapport au procédé classique d'hydrodémétallation. L'étape d'oxydation du procédé selon l'invention peut en effet être mise en oeuvre en conditions douces. Un important gain d'énergie peut ainsi être réalisé suite à la mise en oeuvre de l'invention à température et à pression ambiantes, car il n'y alors plus besoin d'apport d'énergie pour chauffer le réacteur et pour le mettre sous pression.

De plus, le procédé de démétallation selon l'invention ne nécessite pas de consommation d'hydrogène, ce qui conduit à une réduction très importante du coût d'une telle opération, sachant que l'hydrogène est un gaz précieux dans une raffinerie, dont le déficit est en croissance constante compte tenu de la dégradation de la qualité des bruts et des huiles lourdes.

Par ailleurs, le catalyseur utilisé est, en général, un catalyseur peu coûteux et conduisant à de très bons rendements. En effet, on parvient par le procédé de démétallation selon l'invention à éliminer plus de 99% de métaux tels que le nickel et le vanadium d'une coupe pétrolière où les métaux peuvent être présents jusqu'à plusieurs milliers de ppm.

Avantageusement, la métalloporphyrine tétra-méso-substituée utilisée dans le procédé selon l'invention est représentée selon la formule générale I: 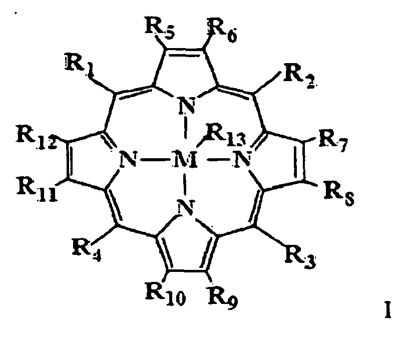 Avec
➢ R₁ à R₄ sont indépendamment choisis parmi :
   - CₙH₂ₙ₊₁, avec n ≥ 3
   - CₙF₂ₙ₊₁, avec n ≥ 1
   - 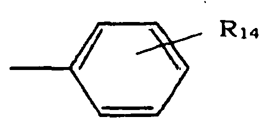 Où R₁₄ est dans n'importe quelle position du noyau phényle, et il peut y avoir zéro, un, deux, trois, quatre ou cinq R₁₄ par noyau phényle. R₁₄ étant choisi notamment parmi Cl, F, Br, NO₂, CN, COOH, SO₃H, CₙH₂ₙ₊₁, CₙF₂ₙ₊₁ où n ≥ 1
   - Alkyl-pyridiniumyl
   - groupement électroattracteur choisi parmi Cl, F, Br, CN, NO₂, SO₃H
➢ M est choisi parmi les éléments du groupe IVb, Vb, VIb, VIIb ou VIII tels que Ti, Cr, Mo, Mn, Fe, Co, Ni, Ru, Rh
➢ R5 à R12 sont indépendamment choisis notamment parmi H, alkyle substitué ou non substitué, aryle substitué ou non substitué, Cl, F, Br, CN, NO₂, SO₃Na.
➢ R₁₃ est choisi notamment parmi Cl⁻, Br⁻, F⁻, I⁻, N₃⁻, CN⁻, SCN⁻, OCN⁻, ClO₄⁻, NO₂⁻, carboxylates...

Avantageusement, la métallophtalocyanine tétra-substituée utilisée dans le procédé selon l'invention est représentée selon la formule générale II : 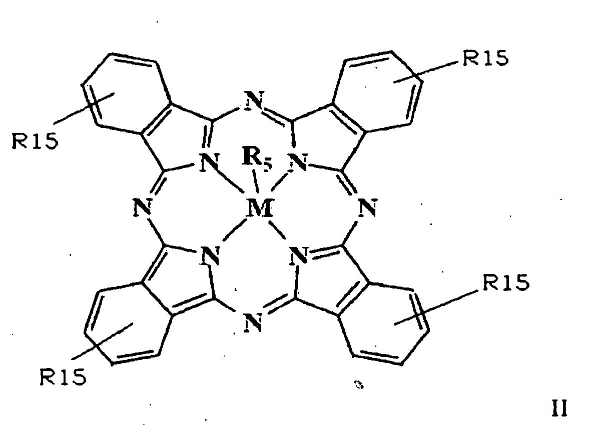 Où R₁₅ est dans n'importe quelle position du noyau phényle, et il peut y avoir zéro, un, deux, trois ou quatre R₁₅ par noyau phényle, et R₁₅ est choisi notamment parmi H, alkyle substitué ou non substitué, aryle substitué ou non substitué, alkoxy, Cl, F, Br, CN, NO₂, SO₃H,
et où M est choisi parmi les éléments du groupe IVb, Vb, VIb, VIIb ou VIII, tels que Ti, Cr, Mo, Mn, Fe, Co, Ni, Ru, Rh,
et R₅ est choisi notamment parmi Cl-, Br-, F-, I-, N₃⁻, CN-, SCN-, OCN-, ClO₄⁻, NO₂⁻, acétate.

De préférence, l'agent oxydant est choisi parmi l'hypochlorite de sodium, monoperoxyphtalate de magnésium (MMP), l'hydroxyperoxyde de cumyle (CumOOH), l'hydroperoxyde de tert-butyle (tBuOOH), l'oxone (KHSO₅), et les peroxydes organiques et minéraux.

De préférence également, les hydrocarbures d'origine pétrolière à traiter sont dilués, notamment par des solvants organiques et/ou des solvants pétroliers.

Les solvants organiques utilisés sont par exemple choisis parmi le dichlorométhane, l'éther, l'acétate d'éthyle, l'éthanol, de préférence le dichlorométhane.

Les solvants pétroliers sont de préférence choisis parmi le propane, le butane, le naphta, le gasoil, le LCO, un pétrole brut léger.

Dans un mode de réalisation du procédé, ledit catalyseur est supporté sur un support solide inorganique et/ou un support solide organique.

Comme support solide inorganique, on pourra utiliser les supports suivants : argile, silice, alumine, zéolithe, dioxyde de titane. Comme support solide organique, on utilisera par exemple un polymère ou une résine chélatante.

De préférence, lorsque le catalyseur est supporté, le procédé selon l'invention comprend au moins une étape d'élimination des métaux.

Dans ce cas, dans une première variante, les métaux peuvent être éliminés par adsorption sur un support adsorbant après l'oxydation de la charge à traiter.

Les supports adsorbants seront choisis de manière à adsorber les sels de métaux libérés par l'oxydation des pétroporphyrines.

L'adsorption peut être réalisée par élution sur une colonne contenant ledit support, en présence de solvants d'élution. Ces derniers seront par exemple choisis parmi le dichlorométhane, le diéthyléther, l'acétate d'éthyle.

L'adsorption peut également être réalisée en mélangeant le support adsorbant à la solution contenant les métaux.

Plus particulièrement, l'étape d'élimination des métaux par adsorption est précédée d'une étape de traitement du milieu réactionnel par un acide minéral, tel que l'acide chlorhydrique. Un tel traitement permet d'améliorer l'adsorption ultérieure des métaux libérés et présents dans le milieu réactionnel sous forme de sels, tels que par exemple NiCl₂ ou VCl₃.

Plus particulièrement encore, l'étape d'élimination des métaux par adsorption est précédée d'une étape de séparation et de lavage du catalyseur, réalisée le cas échéant avant l'étape de traitement par un acide minéral.

Le catalyseur peut ainsi être facilement récupéré et réutilisé.

Dans une autre variante, le support adsorbant est le support du catalyseur, et les métaux sont éliminés au fur et à mesure du déroulement de l'étape d'oxydation de la charge à traiter.

Cette variante présente l'avantage de permettre simultanément l'oxydation des pétroporphyrines et l'élimination des métaux libérés par adsorption sur le support du catalyseur, en une seule étape.

De plus, le catalyseur peut être facilement récupéré, régénéré et réutilisé.

Dans un autre mode de réalisation du procédé, dans lequel le catalyseur n'est pas supporté, l'étape d'oxydation est réalisée dans un milieu réactionnel biphasique, une première phase organique étant formée par la charge à traiter et le catalyseur, et une deuxième phase aqueuse contenant l'oxydant, les deux phases étant mises en contact intime par un moyen de mélange mécanique ou par un agent de transfert de phase.

Dans ce mode de réalisation, l'oxydation et l'élimination des métaux ont également lieu en une seule étape, les métaux libérés par l'oxydation des pétroporphyrines étant transférés et récupérés dans la phase aqueuse. Un simple lavage à l'eau de la phase organique permet ainsi de récupérer les métaux dans la phase aqueuse.

L'agent de transfert de phase sera par exemple choisi parmi le bromure d'octadecyltrimethylammonium, le bromure d'hexadecyltrimethylammonium, le chlorure de tricaprylylmethylammonium, le chlorure de benzyldimethyltetradecylammonium.

De préférence, pour ce mode de réalisation, on choisira un catalyseur soluble dans la phase organique, et l'on préfèrera les oxydants choisis parmi l'oxone, le MMP et l'eau de javel.

L'invention concerne également l'utilisation du procédé selon l'invention pour éliminer les métaux contenus dans les coupes pétrolières telles que le pétrole brut léger, pétrole brut lourd, pétrole brut, résidu atmosphérique, résidu sous vide, schistes bitumineux.

De préférence, les coupes hydrocarbonées pétrolières sont diluées, notamment par des solvants organiques tels que le dichlorométhane, éther, acétate d'éthyle, éthanol, et/ou des solvants pétroliers tels que le naphta, le gasoil, le LCO.

Le procédé selon l'invention peut être utilisé à différents niveaux d'une unité de raffinage d'hydrocarbures d'origine pétrolière, en fonction de la nature des hydrocarbures à traiter.

Ainsi, le procédé de démétallation selon l'invention pourra être mis en oeuvre pour traiter du brut en amont de l'unité de distillation atmosphérique, pour traiter le résidu atmosphérique entre l'unité de distillation atmosphérique et l'unité de distillation sous vide, ou en amont d'unités de traitement. Par exemple, le procédé de démétallation de l'invention peut être mis en oeuvre juste avant l'hydrodémétallation, ou encore être utilisé pour traiter des distillats provenant de la distillation sous vide, avant l'hydrodémétallation et le craquage catalytique, ce dernier étant très sensible à la présence de métaux.

L'invention sera mieux comprise à la lecture de la description détaillée de différents modes de réalisation.

### Exemples

Le procédé de démétallation selon l'invention a été testé sur un mélange modèle de fractions pétrolières lourdes, composé d'un produit pétrolier ne contenant pas de nickel ni de vanadium, auxquelles ont été ajoutées des porphyrines modèles de nickel et de vanadium (exemples 1 à 4, 6 et 7).

La fraction pétrolière utilisée dans les exemples (DAO) est une huile désasphaltée au solvant, issue d'un résidu sous vide du brut Safaniya d'Arabie Saoudite. Il s'agit donc d'un résidu sous vide dépourvu d'asphaltènes, et donc de pétroporphyrines, pauvre en nickel (<0,2 ppm) et en vanadium (<0,1 ppm).

Les porphyrines modèles utilisées sont l'étioporphyrine de nickel (NiETIO) et l'octaéthylporphyrine de vanadyle (OEPVO), qui sont disponibles commercialement. Leurs formules sont les suivantes :

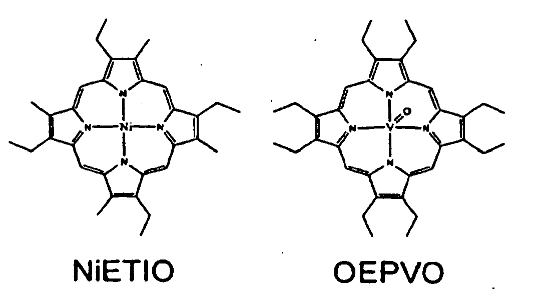

Le procédé de démétallation selon l'invention a également été testé (exemple 5) sur un résidu sous vide issu du brut Kuito d'Angola (KUITO 560+) et contenant 153 ppm de nickel et 125 ppm de vanadium.

Les réactions de démétallation de ces pétroporphyrines modèles ont été suivies par spectroscopie UV-visible. En effet, en raison de leur aromaticité, les porphyrines absorbent dans le domaine du visible. En particulier, les spectres d'absorption des porphyrines présentent une bande intense (ε> 10⁵) entre 360 et 430 nm, appelée bande de Soret, et caractéristique de la conjugaison du macrocycle.

La demanderesse a observé que les catalyseurs utilisés dans le procédé selon l'invention permettaient d'obtenir une coupure en position méso des pétroporphyrines des mélanges à traiter, conduisant à une ouverture des macrocycles, et à la libération des métaux.

Ainsi, l'ouverture du macrocycle des pétroporphyrines qui se produit lors de la démétallation peut être suivie en observant la disparition de la bande de Soret. Ces bandes apparaissent :
- à 390 nm pour NiETIO
- à 409 nm pour OEPVO.

### Synthèse de la métalloporphyrine chloro tetrakis(pentafluorophenyl)- β-tetra-sulfonatoporphyrine de fer : Fe^{III}[TF₅PS₄P]Cl adsorbée sur Silice:

Cette synthèse s'effectue en trois étapes : Sulfonation des positions β-pyrroliques de la tetra-kis-pentafluorophenylporphyrine (H₂TF₅PP), métallation par FeCl₂ puis adsorption sur silice (SiO₂).

### 1- Sulfonation des positions β-pyrroliques de H₂TF₅PP

950 mg de H₂TF₅PP, obtenue à partir de pentafluorobenzaldehyde et de pyrrole, sont placés dans un tricol de 100 mL muni d'un barreau magnétique, d'une ampoule à brome et d'un réfrigérant surmonté d'une garde à chlorure de calcium. Le montage et le solide sont séchés par chauffage à 100°C sous un courant d'argon. Après refroidissement, puis arrêt de l'argon, une solution d'oléum (Aldrich, acide sulfurique fumant contenant 27-33 % de SO₃) est ajoutée progressivement par l'ampoule à brome. Après chauffage à 170°C pendant 17 heures, et refroidissement à température ambiante, le mélange est versé lentement, goutte à goutte, sous agitation vigoureuse, dans de la glace, sur une période de 1 à 2 h. La solution verte obtenue est alors neutralisée progressivement avec une solution concentrée de soude 10 N, en suivant la neutralisation au papier pH. À neutralité, on observe un changement de couleur avec passage de la couleur verte au marron-vert. De l'acétone est ensuite ajoutée au milieu pour faire précipiter le sulfate de sodium formé, celui-ci est filtré puis lavé à l'acétone jusqu'à décoloration complète. Les filtrats sont rassemblés et évaporés à sec. Le solide résultant contenant encore du sulfate de sodium, une purification est effectuée par dissolution du solide dans le minimum de méthanol anhydre, et précipitation des sels par de l'acétone. Après filtration des sels, le filtrat est évaporé à sec, le solide résultant est lavé plusieurs fois à l'acétone puis à l'éther et séché à l'étude à 70 °C durant une nuit. La porphyrine brune H₂TF₅PS₄P est alors obtenue avec un rendement de l'ordre de 98%.

### 2-métallation par FeCl₂.

600 mg de H₂TF₅PS₄P sont dissous dans 10 mL d'eau pure, la solution est ensuite déoxygénée par passage d'un courant d'argon. La métallation s'effectue par addition de 1064 mg de chlorure ferreux hydraté (FeCl₂.4H₂O) sous reflux pendant 24 h. L'avancement de la réaction est suivi par spectroscopie UV visible (bandes de Soret) avec un contrôle par un changement de pH. On compare les spectres UV-visible du milieu réactionnel effectués sur un aliquote à pH ~1, sur un aliquote à pH ~12, ou en présence d'imidazole, à ceux de H₂TF₅PS₄P pris dans les mêmes conditions. À la fin de la réaction, l'excès de fer est précipité sous forme d'hydroxydes de fer par addition d'une quantité suffisante de soude 0,1 N jusqu'à obtention d'un pH de 12-13. Après les quelques heures nécessaires pour une précipitation totale, on filtre les sels de fer, le filtrat est neutralisé à l'acide chlorhydrique puis la solution filtrée est évaporée en présence d'éthanol afin de faciliter le départ de H₂O. Le complexe de fer est purifié d'une part par chromatographie sur une colonne chelex (100-200 mesh, Bio-Rad) et d'autre part par dissolution dans le méthanol, filtration des sels et évaporation du filtrat. On obtient sous forme d'une poudre brune la chloro tetrakis(pentafluorophenyl)-β-tetra-sulfonatoporphyrine de fer: Fe^{III}[TF₅PS₄P]Cl.

### 3-Préparation du catalyseur supporté Fe^{III}[TF₅PS₄P]Cl -Silice

À 1,02 g de silice 60H préalablement séchée sous vide à 150°C pendant 48h, sont ajoutés 5 mL de méthanol contenant 1,02 g de complexe Fe^{III}[TF₅PS₄P]Cl. Après 2 h sous agitation, le milieu est centrifugé et le surnageant est séparé du solide. Le solide est lavé à l'éther, puis séché à l'étuve durant une nuit. On obtient ainsi le catalyseur Fe^{III}[TF₅PS₄P]Cl -SiO₂ chargé à 2,94% en porphyrine de fer.
Des catalyseurs supportés diversement chargés en porphyrine de fer ont été préparés en mélangeant des quantités différentes de Fe^{III}[TF₅PS₄P]Cl à 1 g de silice. Les taux en porphyrine de fer des catalyseurs supportés ont été évalués après microanalyse du fer et du fluor.
Les lots de catalyseur suivants ont été préparés :
**Lot 1** : FeIII[TF5PS4P]Cl-SiO₂ à 2,94%
**Lot 2** : FeIII[TF5PS4P]Cl-SiO₂ chargé à 6,85%,
**Lot 3** : FeIII[TF5PS4P]Cl-SiO₂ chargé à 2,45%.

### Exemple 1 : Oxydation des pétroporphyrines et élimination des métaux en deux étapes

Dans cet exemple le mélange modèle est traité en deux étapes :
- une première étape d'oxydation par l'hydroperoxyde de tert-butyle (*t*-BuOOH) catalysée par Fe^{III}[TF₅PS₄P]Cl-SiO₂, et réalisée à température ambiante,
- une deuxième étape d'élimination des métaux par adsorption sur alumine, également réalisée à température ambiante.

### Préparation du mélange à traiter :

2,0 g de DAO sont dilués dans 20 mL de dichlorométhane préalablement distillé sur de l'hydrure de calcium. A ce mélange sont ajoutés 1230 ppm de Ni sous forme de NiETIO et 1042 ppm de Vanadium sous forme de OEPVO.

### 1^{ère} étape : Oxydation

À ce mélange de 2,05 g rendu homogène par agitation ont été ajoutés 72,3 mg de Fe^{III}[TF₅PS₄P]Cl-SiO₂ à 2,94% (lot 1), et 0,5 mL d'hydroperoxyde de tert-butyle, par paliers de 0,1 mL.

Au bout de 2 jours, la réaction est terminée (suivi des bandes de Soret par spectrométrie UV/visible).

Le résidu est centrifugé afin de récupérer le catalyseur (le culot), et ce dernier est lavé par 5 mL de dichlorométhane. Les surnageants sont réunis et évaporés afin d'obtenir un extrait.

Ce dernier et le résidu sont traités par 10 mL de dichlorométhane saturé en acide chlorhydrique.

### 2^{ème} étape : élimination des métaux par élution sur une colonne d'alumine

La solution obtenue est alors passée directement sur une colonne de 21 g d'alumine basique en utilisant comme solvants successifs : CH₂Cl₂ (6x300 mL), 300 mL d'un mélange CH₂Cl₂ : Et₂O (diéthyléther) (90 : 10), 300 mL d'un mélange CH₂Cl₂ : Et₂O (70 : 30), 300 mL d'un mélange CH₂Cl₂ : Et₂O (50 : 50), 300 mL d'Et₂O, 300 mL d'un mélange Et₂O : AcOEt (acétate d'éthyle) (90 :10), 300 mL d'un mélange Et₂O : AcOEt (50 :50), 300 mL d'AcOEt, 300 mL d'un mélange AcOEt : EtOH (éthanol) (90 : 10), 300 mL d'un mélange AcOEt : EtOH (50 :50), et enfin 300 mL d'EtOH pur.

Les différentes fractions sont ensuite évaporées afin de recueillir la fraction pétrolière de 2,02 g (soit un bilan matière de 97 %) qui est ensuite analysée par spectrométrie à fluorescence X pour en déceler 31 ppm de nickel et 54 ppm de Vanadium.

Les taux d'élimination du nickel et du vanadium sont donc respectivement de 97,5 % et de 94,8 % (en masse).

### Exemple 2 : Oxydation des pétroporphyrines et élimination des métaux en deux étapes

Dans cet exemple le mélange modèle est traité en deux étapes :
- une première étape d'oxydation par l'hydroperoxyde de tert-butyle catalysée par Fe^{III}[TF₅PS₄P]Cl-SiO₂ et réalisée à température ambiante
- une deuxième étape d'élimination des métaux par adsorption sur de l'argile, réalisée à température ambiante.

### Préparation du mélange à traiter :

2,0 g de DAO sont dilués dans 20 mL de dichlorométhane préalablement distillé sur de l'hydrure de calcium. A ce mélange sont ajoutés 1600 ppm de Ni sous forme de NiETIO et 1320 ppm de Vanadium sous forme de OEPVO.

### 1^{ère} étape : Oxydation

À ce mélange de 2,07 g, ont été ajoutés 30.5 mg de Fe^{III}[TF₅PS₄P]Cl-SiO₂ à 2,45 % (lot 3) et 0,9 mL d'hydroperoxyde de tert-butyle par paliers de 0,1 mL. Au bout de 2 jours, la réaction est terminée (suivi des bandes de Soret par spectrométrie UV/visible).

Le résidu est centrifugé d'une part et le catalyseur est lavé par 5 mL de dichlorométhane. Les surnageants sont réunis et évaporés afin d'obtenir un extrait. Ce dernier et le résidu sont traités par 10 mL de dichlorométhane saturé en acide chlorhydrique.

### 2^{ème} étape : élimination des métaux par élution sur une colonne d'argile

La solution obtenue est alors passée directement sur une colonne de 20 g de montmorillonite K10 en utilisant comme solvants successifs CH₂Cl₂ (3x300 mL), 300 mL de diéthyléther, 300 mL d'acétate d'éthyle, et 300 mL d'éthanol pur.

Les différentes fractions sont ensuite évaporées afin de recueillir la fraction pétrolière avec un bilan matière de 97% (en masse) et des teneurs en Nickel et Vanadium analysées par spectrométrie à fluorescence X de moins de 10 ppm (en masse).

Les taux d'élimination du nickel et du vanadium sont respectivement de 99,5 % et de 99,2 % masse.

### Exemple 3 : Oxydation des pétroporphyrines et élimination des métaux en deux étapes

Dans cet exemple le mélange modèle est traité en deux étapes :
- une première étape d'oxydation par l'hydroperoxyde de tert-butyle catalysée par Fe^{III}[TF₅PS₄P]Cl-SiO₂ et réalisée à température ambiante
- une deuxième étape d'élimination des métaux par adsorption sur de l'argile, réalisée à température ambiante.

### Préparation du mélange à traiter :

2,0 g de DAO sont dilués dans 20 mL de dichlorométhane préalablement distillé sur de l'hydrure de calcium. A ce mélange sont ajoutés 1600 ppm de Ni sous forme de NiETIO et 1320 ppm de Vanadium sous forme de OEPVO.

### 1^{ère} étape : Oxydation

A ce mélange de 2,07 g, ont été ajoutés 22,8 mg de Fe^{III}[TF₅PS₄P]Cl-SiO₂ à 6,85% (lot 2), et progressivement 0,675 mL d'hydroperoxyde de tert-butyle. Au bout de 3 heures, la réaction est terminée (suivi des bandes de Soret par spectrométrie UV/visible).

Le résidu est centrifugé d'une part, et le catalyseur est lavé par 8 x 5 ml de dichlorométhane puis 3 x 5 ml de diethyl éther, 4 x 5 mL d'acétate d'éthyle et 4 x 5 ml de méthanol. Les surnageants sont réunis et évaporés afin d'obtenir un extrait. Ce dernier et le résidu sont rassemblés et traités par 15 mL de dichlorométhane saturé en acide chlorhydrique.

### 2^{ème} étape : élimination des métaux par adsorption sur de l'argile par mélange avec l'argile

5 mL de la solution obtenue sont mélangés à 10 g de Montmorillonite K10 et laissés sous agitation pendant 24 h. Le support est alors lavé plusieurs fois au dichlorométhane et au diéthyl éther. 0,66 g de produit sont récupérés (soit un bilan matière de près de 100% proportionnellement aux 5 mL prélevés) dans lesquels les teneurs en nickel et vanadium mesurées par spectrométrie à fluorescence X sont respectivement inférieures à 19 et à 39 ppm (masse). Les taux d'élimination du nickel et du vanadium sont respectivement de 98,9 % et de 97,0 % en masse.

### Exemple 4 : Oxydation des pétroporphyrines et élimination des métaux en une étape dans un milieu biphasique

Dans cet exemple, le mélange modèle est traité en une étape bi phasique d'oxydation par l'hypochlorite de sodium NaOCl catalysée par Mn^{III}[TDCPP]Cl et avec extraction simultanée des métaux par la phase aqueuse, à température ambiante.

### Préparation du mélange à traiter :

A 1g de DAO dans 10 ml de dichlorométhane préalablement distillé sur de l'hydrure de calcium sont ajoutés 3310 ppm de nickel sous forme de NiETIO et 2265 ppm de vanadium sous forme de OEPVO.

### Oxydation et élimination des métaux

A ce mélange sont ajoutés 6 mg de porphyrine commerciale Mn^{III}[TDCPP]Cl (méso-tétra-(2,6-dichloro) phényl porphyrine de manganèse) soluble en phase organique, 10 mg de chlorure de benzyldiméthyltetradécylammonium, 20 µl de ter-butyl pyridine. Puis une addition progressive de 6,2 ml d'eau de javel à 9,6% de chlore (2,7 ml/L d'oxygène actif) est réalisée sur 4 heures pour oxyder le milieu.

Après oxydation et destruction des porphyrines suivies par spectrométrie UV/Visible (suivi des bandes de Soret), le milieu réactionnel est décanté et lavé 3 fois avec 15 ml d'eau ultra pure. La phase organique est alors séchée au sulfate de sodium puis séchée sous air à 50-90°C.

Le bilan matière de l'opération est de 100% en masse et l'extrait obtenu renferme alors 205 ppm de nickel et 89 ppm de vanadium, soit des taux d'élimination de près de 95% en masse.

### Exemple 5 : Oxydation des pétroporphyrines et élimination des métaux en une étape, par adsorption sur le support du catalyseur

Dans cet exemple, le procédé selon l'invention a été testé sur une charge réelle consistant en un résidu Kuito 560+.

L'élimination des métaux est réalisée par adsorption sur le support du catalyseur.

L'agent oxydant utilisé est l'hydroperoxyde de tert-butyle et l'oxydation est catalysée avec un mélange Fe^{III}(T₄MPyP)C1-SiO₂ / Fe^{III}(TF₅PS₄P)Cl-KlO.

A 16 g de résidu Kuito dissous dans 160 ml de dichlorométhane préalablement distillé sur de l'hydrure de calcium, sont ajoutés 20 g de chloro *meso*-tetra-(4-methylpyridimiunyl) porphyrine de fer Fe^{III}(T₄MPyP)C1-SiO₂ à 5,3% masse sur silice et 0,6 g de Fe^{III}(TF₅PS₄P)C1-K10 à 4,2% masse sur silice et 18 ml d'une solution d'hydroperoxyde de terbutyle à 80% dans l'eau.

Après un temps de contact de 2 semaines à température ambiante, (disparition totale des bandes de Soret mesurées par spectrométrie UV/Visible), le résidu est centrifugé et le catalyseur est lavé au dichlorométhane. Les surnageants réunis et évaporés sont mélangés avec le résidu. Les teneurs en métaux mesurées par spectrométrie par fluorescence X sont alors de 41 ppm masse pour le Nickel et 9 ppm masse pour le Vanadium. Le processus a donc permis d'éliminer 73,2% du nickel et 92,8% du vanadium de la charge Kuito.

Les résultats des exemples 1 à 5 sont résumés dans le tableau 1 ci-après.

**Tableau 1**

| **Exemple** | Avant traitement | | Après traitement | | |
|---|---|---|---|---|---|
| | Ni (ppm) | V(ppm) | Bilan matière | Ni (ppm) | V (ppm) |
| | | | | Taux d'élimination | Taux d'élimination |
| **1** | 1230 | 1042 | 97% | 31 | 54 |
| | | | | 97,5 % | 94,8 % |
| **2** | 1600 | 1320 | 97% | <10 | <10 |
| | | | | 99,5% | 99,2% |
| **3** | 1600 | 1320 | 100% | <19 | <39 |
| | | | | 98,9% | 97,0% |
| **4** | 3310 | 2265 | 100% | 205 | 89 |
| | | | | 93,8% | 96,1% |
| **5** | 153 | 125 | 80% | 41 | 24 |
| | | | | 73,2% | 92,8% |

On observe ainsi un taux d'élimination élevé des métaux obtenu avec le procédé selon l'invention.

### Exemple 6: Oxydation des pétroporphyrines et élimination des métaux en une étape, par adsorption sur le support du catalyseur

Mélange à traiter : mélange modèle composé de 2,0 g de DAO dopés avec 1527 ppm de nickel sous forme de NiETIO et 1296 ppm de vanadium sous forme de OEPVO.
Catalyseur : Fe^{III}[TF₅PS₄P]Cl-SiO₂
Oxydant : hydroperoxyde de tert-butyle (t-BuOOH)

Dans 20 ml de dichlomorométhane contenant le mélange à traiter, sont ajoutés 30,0 mg de Fe^{III}[TF₅PS₄P]Cl sur SiO₂ à 6.85% (lot 3), et progressivement 0,8 ml d'hydroperoxyde de tert-butyle par palier de 0,1 ml, à température ambiante. 1 à 2 heures après chaque ajout, une analyse par spectrométrie UV/Visible des bandes de Soret des porphyrines modèles est réalisée. Au bout de 8 heures, les bandes de Soret caractéristiques des porphyrines modèles ont complètement disparu.

### Exemple 7: Oxydation des pétroporphyrines et élimination des métaux en une étape, par adsorption sur le support du catalyseur

Mélange à traiter : mélange modèle composé de 2,0 g de DAO dopés avec 1545 ppm de nickel sous forme de NiETIO et 1257 ppm de vanadium sous forme de OEPVO.
Catalyseur : phtalocyanine de fer supportée sur de la silice Fe^{III}[PcS]-SiO₂ (disponible dans le commerce)
Oxydant : hydroperoxyde de tert-butyle (t-BuOOH)

Dans 20 ml de dichlomorométhane contenant le mélange à traiter, sont ajoutés 204 mg de phtalocyanine commerciale Fe^{III}[PcS] sur SiO₂ 60H à 20%, et progressivement 4,5 ml d'hydroperoxyde de tert-butyle par palier de 0,1 ml, à température ambiante. 1 à 2 heures après chaque ajout, une analyse par spectrométrie UV/Visible des bandes de Soret des porphyrines modèles est réalisée. Au bout de 16 heures, les bandes de Soret caractéristiques des porphyrines modèles ont complètement disparues.

Le tableau 2 ci-après résume les résultats obtenus avec les exemples 6 et 7.

Ces exemples montrent que la porphyrine de fer supportée est plus efficace que la phtalocyanine de fer supportée.

**Tableau 2**

| | Exemple 6 | Exemple 7 |
|---|---|---|
| Catalyseur : | Fe^{III}[TF₅PS₄P]Cl-SiO₂ | Fe^{III}[PcS]-SiO₂ |
| Quantité : | 30 mg | 204 mg |
| Quantité de Fer : | 40 ppm | 1130 ppm |
| Oxydant | t-BuOOH 0,8 ml | t-BuOOH 4,5 ml |
| Temps de réaction | 8 heures | 16 heures |

### Exemple 8:

A titre d'exemple, la demanderesse a testé d'autres métalloporphyrines supportées sur des supports d'alumine, d'argile, de silice et de polystyrène, aptes à catalyser la réaction de dégradation des porphyrines et qui montrent une disparition totale du Ni et V dans des conditions similaires aux conditions des exemples 1 à 3.

Mode opératoire : à 2 ml d'une solution à 1mM de NiETIO (10 équivalents molaires par rapport au catalyseur) dans du dichlorométhane, est ajouté 1 équivalent molaire du catalyseur testé en présence d'hydroperoxyde de tert-butyle à 80 % (100 équivalents), sous agitation, à pression et température ambiantes.

De même, à 2 ml d'une solution à ImM de OEPVO (10 équivalents molaires) dans du dichlorométhane, est ajouté 1 équivalent molaire du catalyseur testé en présence d'hydroperoxyde de tert-butyle à 80 % (100 équivalents), sous agitation, à pression et température ambiantes.

### Liste des métalloporphyrines testées :

(1) Tetrapyridinium porphyrine de Manganèse (Meso-tetra-(n-méthyl-4-pyridimiunyl) porphyrine de manganèse) sur argile KSF avec ligand chlorure
(2) Tetrapyridinium porphyrines de Fer sur argile K10 avec ligand chlorure
(3) Tetrapyridinium porphyrines de Fer sur silice avec ligand chlorure
(4) Tetrapyridinium porphyrines de Fer sur silice avec ligand nitrate
(5) Tetrapyridinium porphyrines de Manganèse sur silice avec ligand chlorure
(6) Metalloporphyrine fluorée et bromée sur les positions β-pyrollique Si-O-Si-[CH₂NH{C₆F₄}(C₆F₅)Br₈PFeNO₃ sur silice avec ligand nitrate
(7) Metalloporphyrine fluorée et bromée sur les positions β-pyrolliques Si-O-Si-[CH₂]₃NH{C₆F₄}(C₆F₅) ₃Br₈PFeC1 sur silice avec ligand chlorure
(8) Metalloporphyrine fluorée Si-O-Si-[CH₂]₃NHC₆F₄}(C₆F₅)₃PFeC1 sur silice avec ligand chlorure
(9) Metalloporphyrine chlorée Si-O-Si-[CH₂]₃NH{C₆Cl₄}(C₆Cl₅)₃PFeCl sur silice avec ligand chlorure
(10) Metalloporphyrine fluorée KlO-[CH₂]₃NH{C₆F₄}(C₆F₅)₃PFeCl sur argile avec ligand chlorure
(11) Metalloporphyrine fluorée PySty-[CH₂]₃NH{C₆F₄}(C₆F₅)₃PFeCl sur polystyrène avec ligand chlorure
(12) Tetrapyridinium porphyrines de Fer sur argile K10 avec ligand nitrate
(13) Metalloporphyrine fluorée Si-O-Si-[CH₂]₃NH{C₆F₄}(C₆F₅)₃PFeNO₃ sur silice avec ligand nitrate
(14) Metalloporphyrine fluorée K10-[CH₂]₃NH{C₆F₄}(C₆F₅)₃PFeNO₃ sur argile avec ligand nitrate
(15) Metalloporphyrine fluorée PySty-[CH₂]₃NH{C₆F₄}(C₆F₅)₃PFeNO₃ sur polystyrène avec ligand nitrate

Le tableau 3 suivant résume les résultats obtenus avec ces différents catalyseurs

La métalloporphyrine apportant la meilleure dégradation de NiETIO et OEPVO est la métalloporphyrine de fer bromée β-pyrrolique {Si-O-Si[CH₂]₃NHC₆F₄}(C₆H₅)₃Br₈PFeNO₃ :
- dégradation de NiETIO en 5 minutes
- dégradation de OEPVO en 3 heures.

**Tableau 3 temps de réaction avec les catalyseurs (1) à (15)**

| Catalyseur | NiETIO | | OEPVO | |
|---|---|---|---|---|
| | T_{1/2} (min) | Disparition totale | T_{1/2} | Disparition totale |
| **(1)** | 120 | 6 h | 7 jours | 20 jours |
| **(2)** | 33 | 12 h | | |
| **(3)** | 33 | 3 h | 43 min | 3 h |
| **(4)** | 28 | 2 h | 10 min | 1h 42 min |
| **(5)** | 720 | 48 h | 4 jours | 10 jours |
| **(6)** | 1 | 5 min | 26 min | 3 h |
| **(7)** | 1 | 9 min | 30 min | 3 h |
| **(8)** | 24 | 2 h | | |
| **(9)** | 69 | 3,5 h | | |
| **(10)** | 26 | 3 h | | |
| **(11)** | 21 | 3 h | 420 min | 12 h |
| **(12)** | 120 | 12 h | | |
| **(13)** | 15 | 1h 18 min | | |
| **(14)** | 6 | 15 min | | |
| **(15)** | 46 | 2 h | | |

| | | | | |
|---|---|---|---|---|
| T_{1/2} : temps de disparition de 50 % de la bande de Soret caractéristique de la pétroporphyrine | | | | |

## Revendications

1. Procédé de démétallation d'hydrocarbures d'origine pétrolière comprenant au moins une coupe hydrocarbonée ayant une température d'ébullition supérieure ou égale à 360°C, ledit procédé étant **caractérisé en ce qu'**il comprend au moins une étape d'oxydation en présence d'au moins un agent oxydant et d'au moins un catalyseur comprenant au moins une métalloporphyrine tétra-méso-substituée et/ou une métallophtalocyanine tétra-substituée.

2. Procédé selon la revendication 1, **caractérisé en ce que** la métalloporphyrine tétra-méso-substituée est représentée selon la formule générale 1 : 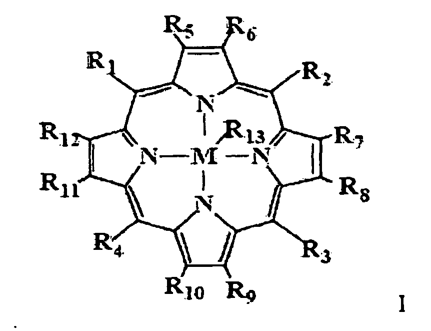 Avec
➢ R₁ à R₄ sont indépendamment choisis parmi :
- CₙH₂ₙ₊₁ , avec n ≥ 3
- CₙF₂ₙ₊₁ , avec n ≥ 1 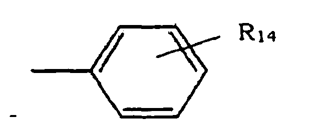 Où R₁₄ est dans n'importe quelle position du noyau phényle, et il peut y avoir zéro, un, deux, trois, quatre ou cinq R₁₄ par noyau phényle. R₁₄ étant choisi notamment parmi Cl, F, Br, NO₂, CN, COOH, SO₃H, CₙH₂ₙ₊₁, CₙF₂ₙ₊₁ où n ≥ 1
- Alkyl-pyridiniumyl
- groupement électroattracteur choisi parmi Cl, F, Br, CN, NO₂, SO₃H
➢ M est choisi parmi les éléments du groupe IVb, Vb, VIb, VIIb ou VIII tels que Ti, Cr, Mo, Mn, Fe, Co, Ni, Ru, Rh
➢ R5 à R12 sont indépendamment choisis notamment parmi H, alkyle substitué ou non substitué, aryle substitué ou non substitué, Cl, F, Br, CN, NO₂, SO₃Na.
➢ R₁₃ est choisi notamment parmi Cl-, Br-, F-, I-, N₃-, CN-, SCN-, OCN-, ClO₄-, NO₂-, carboxylates...

3. Procédé selon la revendication 1, **caractérisé en ce que** la métallophtalocyanine tétra substituée est représentée selon la formule générale II : 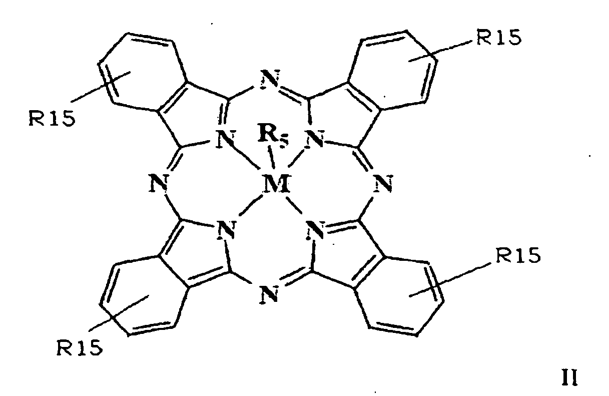 Où R₁₅ est dans n'importe quelle position du noyau phényle, et il peut y avoir zéro, un, deux, trois ou quatre R₁₅ par noyau phényle, et R₁₅ est choisi notamment parmi H, alkyle substitué ou non substitué, aryle substitué ou non substitué, alkoxy, Cl, F, Br, CN, NO₂, SO₃H,
et où M est choisi parmi les éléments du groupe IVb, Vb, VIb, VIIb ou VIII, tels que Ti, Cr, Mo, Mn, Fe, Co, Ni, Ru, Rh,
et R₅ est choisi notamment parmi Cl, Br-, F-, I-, N₃-, CN-, SCN-, OCN-, ClO₄-, NO₂-, acétate.

4. Procédé selon l'une quelconque des revendications précédentes **caractérisé en ce que** l'agent oxydant est choisi parmi l'hypochlorite de sodium, monoperoxyphtalate de magnésium (MMP), l'hydroxyperoxyde de cumyle (CumOOH), l'hydroperoxyde de tert-butyle (tBuOOH), l'oxone (KHSO₅), et les peroxydes organiques et minéraux.

5. Procédé selon l'une quelconque des revendications précédentes **caractérisé en ce que** les hydrocarbures d'origine pétrolière à traiter sont dilués, notamment par des solvants organiques, tels que le dichlorométhane, éther, acétate d'éthyle, éthanol, et/ou des solvants pétroliers, tels que le propane, le butane, le naphta, le gasoil, le LCO, un pétrole brut léger.

6. Procédé selon l'une quelconque des revendications précédentes, **caractérisé en ce que** ledit catalyseur est supporté sur un support solide inorganique, tel que argile, silice, alumine, zéolithe, dioxyde de titane et/ou un support solide organique, tel qu'un polymère, une résine chélatante.

7. Procédé selon la revendication 6, **caractérisé en ce qu'**il comprend au moins une étape d'élimination des métaux.

8. Procédé selon la revendication 7, **caractérisé en ce que**, après oxydation de la charge à traiter, les métaux sont éliminés par adsorption sur un support adsorbant.

9. Procédé selon la revendication 8, **caractérisé en ce que** l'étape d'élimination des métaux par adsorption est précédée d'une étape de traitement du milieu réactionnel par un acide minéral, tel que l'acide chlorhydrique.

10. Procédé selon la revendication 8 ou 9, **caractérisé en ce que** l'étape d'élimination des métaux par adsorption est précédée d'une étape de séparation et de lavage du catalyseur, réalisée le cas échéant avant l'étape de traitement par un acide minéral.

11. Procédé selon la revendication 8, **caractérisé en ce que** le support adsorbant est le support du catalyseur, et **en ce que** les métaux sont éliminés au fur et à mesure du déroulement de l'étape d'oxydation de la charge à traiter.

12. Procédé selon l'une quelconque des revendications 1 à 6 **caractérisé en ce que** l'étape d'oxydation est réalisée dans un milieu réactionnel biphasique, une première phase organique étant formée par la charge à traiter et le catalyseur, et une deuxième phase aqueuse contenant l'oxydant, les deux phases étant mises en contact intime par un moyen de mélange mécanique ou par un agent de transfert de phase, tel que le bromure d'octadécyltriméthylammonium, le bromure d'hexadecyltriméthylammonium, le chlorure de tricaprylylméthylammonium, le chlorure de benzyldiméthyltétradécylammonium.

13. Utilisation du procédé selon l'une des revendications précédentes pour éliminer les métaux contenus dans les coupes pétrolières telles que le pétrole brut léger, pétrole brut lourd, pétrole brut, résidu atmosphérique, résidu sous vide, schistes bitumineux.

14. Utilisation selon la revendication 13, pour traiter des coupes hydrocarbonées pétrolières diluées, notamment par des solvants organiques tels que le dichlorométhane, éther, acétate d'éthyle, éthanol, et/ou des solvants pétroliers tels que le naphta, le gasoil, le LCO.

## Claims

1. Method for demetallization of hydrocarbons of petroleum origin comprising at least one hydrocarbon-based cut having a boiling point greater than or equal to 360°C, said method being **characterized in that** it comprises at least one oxidation step in the presence of at least one oxidizing agent and of at least one catalyst comprising at least one tetra-meso-substituted metalloporphyrin and/or a tetra-substituted metallophthalocyanine.

2. Method according to Claim 1, **characterized in that** the tetra-meso-substituted metalloporhyrin is represented according to the general formula I: 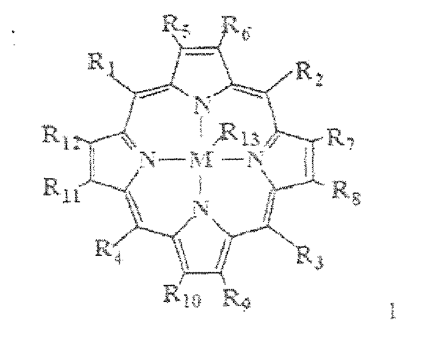 where
> R₁ to R₄ are independently chosen from:
- CₙH₂ₙ₊₁, with n ≥ 3;
- CₙF₂ₙ₊₁, with n ≥ 1; 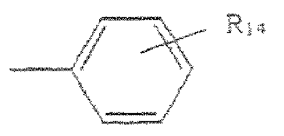 where R₁₄ is in any position of the phenyl ring, and there may be zero, one, two, three, four or five R₁₄ groups per phenyl ring, R₁₄ being chosen, in particular, from Cl, F, Br, NO₂, CN, COOH, SO₃H, CₙH₂ₙ₊₁, CₙF₂ₙ₊₁ where n ≥ 1;
- alkyl pyridiniumyl;
- electron-withdrawing group chosen from Cl, F, Br, CN, NO₂, SO₃H;
> M is chosen from the elements from group IVb, Vb, VIb, VIIb or VIII such as Ti, Cr, Mo, Mn, Fe, Co, Ni, Ru, Rh;
> R₅ to R₁₂ are independently chosen, in particular, from H, substituted or unsubstituted alkyl, substituted or unsubstituted aryl, Cl, F, Br, CN, NO₂, SO₃Na;
> R₁₃ is chosen, in particular from Cl⁻, Br⁻, F⁻, I⁻, N₃⁻, CN⁻, SCN⁻, OCN⁻, ClO₄⁻, NO₂⁻, carboxylates, etc.

3. Method according to Claim 1, **characterized in that** the tetra-substituted metallophthalocyanine is represented according to the general formula II: 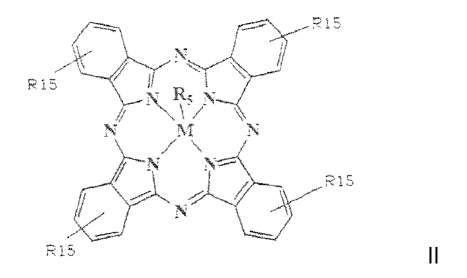 where R₁₅ is in any position of the phenyl group, and there may be zero, one, two, three or four R₁₅ groups per phenyl ring, and R₁₅ is chosen, in particular from H, substituted or unsubstituted alkyl, substituted or unsubstituted aryl, alkoxy, Cl, F, Br, CN, NO₂, SO₃H,
and where M is chosen from the elements from group IVb, Vb, VIb, VIIb or VIII such as Ti, Cr, Mo, Mn, Fe, Co, Ni, Ru, Rh;
and R₅ is chosen, in particular, from Cl⁻, Br⁻, F⁻, I⁻, N₃⁻, CN⁻, SCN⁻, OCN⁻, ClO₄⁻, NO₂⁻, acetate.

4. Method according to any one of the preceding claims, **characterized in that** the oxidizing agent is chosen from sodium hypochlorite, magnesium monoperoxyphthalate (MMP), cumyl hydroxyperoxide (CumOOH), tert-butyl hydroperoxide (tBuOOH), oxone (KHSO₅), and organic and inorganic peroxides.

5. Method according to any one of the preceding claims, **characterized in that** the hydrocarbons of petroleum origin to be treated are diluted, especially by organic solvents, such as dichloromethane, ether, ethyl acetate, ethanol and/or petroleum solvents such as propane, butane, naphtha, gas oil, LCO, a light crude oil.

6. Method according to any one of the preceding claims, **characterized in that** said catalyst is supported on an inorganic solid support, such as clay, silica, alumina, zeolite, titanium dioxide and/or an organic solid support, such as a polymer, a chelating resin.

7. Method according to Claim 6, **characterized in that** it comprises at least one step of removing metals.

8. Method according to Claim 7, **characterized in that**, after oxidation of the charge to be treated, the metals are removed by adsorption onto an adsorbent support.

9. Method according to Claim 8, **characterized in that** the step of removing metals by adsorption is preceded by a step of treating the reaction medium with an inorganic acid, such as hydrochloric acid.

10. Method according to Claim 8 or 9, **characterized in that** the step of removing metals by adsorption is preceded by a step of separating and washing the catalyst, carried out, where necessary, before the step of treating with an inorganic acid.

11. Method according to Claim 8, **characterized in that** the adsorbent support is the support of the catalyst, and **in that** the metals are removed as the step of oxidation of the charge to be treated progresses.

12. Method according to any one of Claims 1 to 6, **characterized in that** the oxidation step is carried out in a two-phase reaction medium, an organic first phase being formed by the charge to be treated and the catalyst, and an aqueous second phase containing the oxidizer, the two phases being brought into intimate contact by mechanical mixing means or by a phase transfer agent, such as octadecyltrimethylammonium bromide, hexadecyltrimethylammonium bromide, tricaprylylmethylammonium chloride, benzyldimethyltetradecylammonium chloride.

13. Use of the method according to one of the preceding claims for removing the metals contained in the petroleum cuts such as light crude oil, heavy crude oil, crude oil, atmospheric residue, vacuum residue, oil shales.

14. Use according to Claim 13, for treating petroleum hydrocarbon-based cuts that are diluted, especially by organic solvents such as dichloromethane, ether, ethyl acetate, ethanol and/or petroleum solvents such as naphtha, gas oil, LCO.

## Patentansprüche

1. Verfahren zur Entmetallisierung von Kohlenwasserstoffen aus Erdöl, die zumindest eine Kohlenwasserstofffraktion aufweisen, die eine Siedetemperatur hat, welche größer oder gleich 360°C ist, wobei das Verfahren **dadurch gekennzeichnet ist, dass** es zumindest einen Oxidationsschritt in Anwesenheit von zumindest einem Oxidationsmittel und von zumindest einem Katalysator aufweist, der zumindest ein tetra-mesosubstituiertes Metalloporphyrin und/oder ein tetrasubstituiertes Metallphtalocyanin aufweist.

2. Verfahren gemäß Anspruch 1, **dadurch gekennzeichnet, dass** das tetra-meso-substituierte Metalloporphyrin gemäß der allgemeinen Formel I wiedergegeben ist: 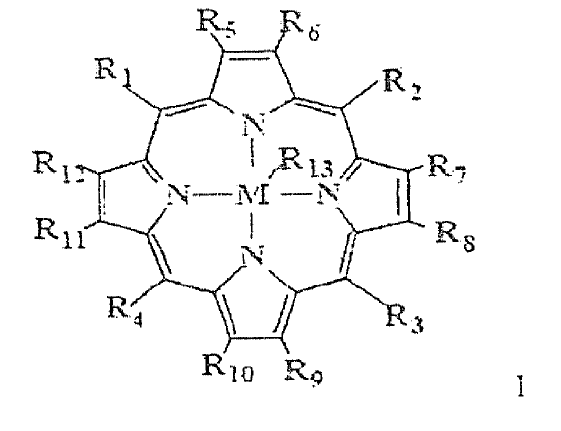 wobei
➢ R₁ bis R₄ unabhängig ausgewählt werden aus:
- CₙH₂ₙ₊₁, mit n ≥ 3
- CₙF₂ₙ₊₁, mit n ≥ 1 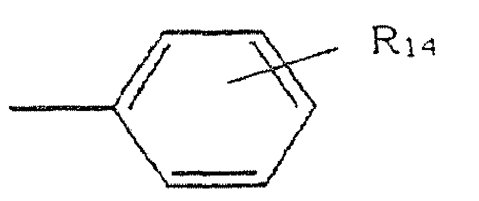 wobei R₁₄ an irgendeiner Position des Phenylrings sitzt, und es kann kein, ein, zwei, drei, vier oder fünf R₁₄ am Phenylring haben, wobei R₁₄ insbesondere ausgewählt wird aus Cl, F, Br, NO₂, CN, COOH, SO₃H, CₙH₂ₙ₊₁, CₙF₂ₙ₊₁ wobei n ≥ 1
- Alkyl-Pyridiniumyl
- die Elektronenziehende Gruppe ausgewählt wird aus Cl, F, Br, CN, NO₂, SO₃H
➢ M ausgewählt wird aus den Elementen der Gruppe IVb, Vb, VIb, VIIb oder VIII, wie Ti, Cr, Mo, Mn, Fe, Co, Ni, Ru, Rh
➢ R5 bis R12 insbesondere unabhängig ausgewählt werden aus H, substituiertem oder nicht substituiertem Alkyl, substituiertem oder nicht substituiertem Aryl, Cl, F, Br, CN, NO₂, SO₃Na
➢ R₁₃ insbesondere ausgewählt wird aus Cl⁻, Br⁻, F⁻, I⁻, N₃⁻, CN⁻, SCN⁻, OCN⁻, ClO₄⁻, NO₂⁻, Carboxylaten ...

3. Verfahren gemäß Anspruch 1, **dadurch gekennzeichnet, dass** das tetra-substituierte Metallphthalocyanin gemäß der allgemeinen Formel II wiedergegeben ist: 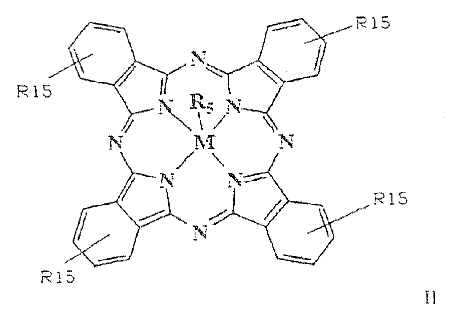 wobei R₁₅ an irgendeiner Position des Phenylrings sitzt, und es kann kein, ein, zwei, drei, oder vier R₁₅ pro Phenylring haben, und R₁₅ insbesondere ausgewählt wird aus H, substituiertem oder nicht substituiertem Alkyl, substituiertem oder nicht substituiertem Aryl, Alkoxy, Cl, F, Br, CN, NO₂, SO₃H,
und wobei M ausgewählt wird aus den Elementen der Gruppe IVb, Vb, VIb, VIIb oder VIII, wie Ti, Cr, Mo, Mn, Fe, Co, Ni, Ru, Rh,
und R₅ insbesondere ausgewählt wird aus Cl⁻, Br⁻, F⁻, I⁻, N₃⁻, CN⁻, SCN⁻, OCN⁻, ClO₄⁻, NO₂⁻, Acetat.

4. Verfahren gemäß einem der vorhergehenden Ansprüche, **dadurch gekennzeichnet, dass** das Oxidationsmittel ausgewählt wird aus Natriumhypochlorit, Magnesiummonoperoxyphtalat (MMP), Cumylhydroxyperoxyd (CumOOH), tert-Butylhydroperoxyd (tBuOOH), Oxon (KHSO₅), und organischen und mineralischen Peroxyden.

5. Verfahren gemäß einem der vorhergehenden Ansprüche, **dadurch gekennzeichnet, dass** die zu behandelnden Kohlenwasserstoffe aus Erdöl verdünnt werden, insbesondere mit organischen Lösungsmitteln, wie Dichlormethan, Ether, Ethylacetat, Ethanol und/oder Öllösungsmitteln, wie Propan, Butan, Rohbenzin, Diesel, LCO, ein leichtes Rohöl.

6. Verfahren gemäß einem der vorhergehenden Ansprüche, **dadurch gekennzeichnet, dass** der Katalysator auf einem soliden anorganischen Träger getragen wird, wie Ton, Siliciumdioxid, Aluminiumoxid, Zeolith, Titandioxyd und/oder auf einem festen organischen Träger, wie ein Polymer, ein chelatbildender Harz.

7. Verfahren gemäß Anspruch 6, **dadurch gekennzeichnet, dass** es zumindest einen Schritt zur Metallabsonderung aufweist.

8. Verfahren gemäß Anspruch 7, **dadurch gekennzeichnet, dass** die Metalle nach Oxidation der zu verarbeitenden Charge durch Adsorption auf einem adsorbierenden Träger abgesondert werden.

9. Verfahren gemäß Anspruch 8, **dadurch gekennzeichnet, dass** dem Schritt der Metallabsonderung durch Adsorption ein Schritt zur Behandlung des reaktiven Mediums mit einer Mineralsäure vorausgeht, wie der Hydrochlorsäure.

10. Verfahren gemäß Anspruch 8 oder 9, **dadurch gekennzeichnet, dass** dem Schritt zur Metallabsonderung durch Adsorption ein Schritt zum Abtrennen und Abwaschen des Katalysators vorausgeht, der gegebenenfalls vor dem Schritt der Behandlung mit einer Mineralsäure realisiert wird.

11. Verfahren gemäß Anspruch 8, **dadurch gekennzeichnet, dass** der adsorbierende Träger der Träger des Katalysators ist, und dadurch, dass die Metalle im Verlauf des Oxidationsschritts der zu behandelnden Charge nach und nach abgesondert werden.

12. Verfahren gemäß einem der Ansprüche 1 bis 6, **dadurch gekennzeichnet, dass** der Oxidationsschritt in einem reaktiven, zweiphasigen Medium realisiert wird, wobei eine erste, organische Phase von der zu behandelnden Charge und dem Katalysator gebildet wird, und eine zweite, wässrige Phase das Oxidationsmittel enthält, wobei die zwei Phasen durch ein mechanisches Vermischungsmittel oder durch ein Phasentransfersystemteil, wie Oktadecyltrimethylammoniumbromid, Hexadecyltrimethylammoniumbromid, Tricaprylylmethylammoniumchlorid, Benzyldimethyltetradecylammoniumchlorid, in engen Kontakt gebracht werden.

13. Verwendung des Verfahrens gemäß einem der vorhergehenden Ansprüche um die Metalle zu entfernen, die in den Erdölfraktionen, wie leichtes Rohöl, schweres Rohöl, Rohöl, atmosphärische Reststoffe, Reststoffe unter Vakuum, bituminöser Schiefer, enthalten sind.

14. Verwendung gemäß Anspruch 13 zum Verarbeiten der verdünnten Kohlenwasserstoffölfraktionen, insbesondere durch organische Lösungsmittel wie Dichlormethan, Ether, Ethylacetat, Ethanol, und/oder Öllösungsmittel wie Rohbenzin, Diesel, LCO.
